# EUROPEAN PATENT SPECIFICATION

(11) **EP 4 178 010 B1**
(45) Date of publication and mention of the grant of the patent: **13.05.2026**
(21) Application number: 22206208.5
(22) Date of filing: 08.11.2022
(51) Int. Cl.: C08J 5/12, C09J 5/00, H01M 50/124, H01M 50/14, H01M 50/143, H01M 50/105, H01M 50/211, H01M 50/24, H01M 10/658, H01M 50/242, H01M 50/264

(54) **BATTERY CELL STACK AND MANUFACTURING METHOD THEREOF**
BATTERIEZELLENSTAPEL UND HERSTELLUNGSVERFAHREN DAFÜR
EMPILEMENT D'ÉLÉMENTS DE BATTERIE ET SON PROCÉDÉ DE FABRICATION

(30) Priority: 09.11.2021 KR 20210153335; 06.10.2022 KR 20220128041
(43) Date of publication of application: 10.05.2023
(73) Proprietor: SK On Co., Ltd., Seoul 03161 (KR)
(72) Inventor: RHEE, Seo Roh, 34124 Daejeon (KR); KIM, Ji San, 34124 Daejeon (KR); PARK, Chi Min, 34124 Daejeon (KR); YOO, Tak Kyung, 34124 Daejeon (KR)
(74) Representative: Prüfer & Partner mbB Patentanwälte · Rechtsanwälte

(56) References cited:
- KR-A- 20210 020 665
- US-A1- 2020 006 726

## Description

### [BACKGROUND OF THE INVENTION]

### 1. Field of the Invention

The present invention relates to a battery cell stack and a method of manufacturing the same.

### 2. Description of the Related Art

Research into a rechargeable secondary battery capable of being charged and discharged has been actively conducted in accordance with the development of state-of-the-art fields such as a digital camera, a cellular phone, a laptop computer, a hybrid automobile and the like. Examples of the secondary battery may include a nickel-cadmium battery, a nickel-metal hydride battery, a nickel-hydrogen battery, and a lithium secondary battery. Among them, since the lithium secondary batteries have a high operating voltage and excellent energy density characteristics per unit weight, they are used as a power source for portable electronic devices. Alternately, a plurality of lithium secondary batteries are connected in series, and then used in a high-output hybrid vehicle or an electric vehicle.

When used in the high-output hybrid vehicle or electric vehicle, in order to increase capacity and output of the secondary battery, a plurality of secondary batteries may be connected and used in a form of one battery module and a battery pack. In order to configure the above-described battery module or battery pack, various fastening parts or cooling equipment are required. However, these fastening parts or cooling equipment cause an increase in manufacturing costs while increasing volume and weight thereof, and also lead to a decrease in output in proportion to the increased volume and weight.

A method of manufacturing a cell stack forming a battery module by attaching a tape type adhesive to cell surfaces is also used. However, processes and equipment for inputting the tape and removing a release paper are complicated, and waste such as release paper may be generated in large quantities during manufacturing the battery module.

In addition, when the tape is incorrectly attached due to an error in the process or a difference in flatness of the cell surface, it is difficult to perform a rework on the tape and reuse thereof.

Korean Patent Publication No. 10-2020-0002349(Family Patent of US 2020/0006726 A1) discloses a battery module including a unit sheet coated with a polymer resin on the outside, and Korean Patent Publication No. 10-2021-0020665 discloses a battery module including a resin composition satisfying specific values of physical properties such as thickness, length, and elongation.

Efforts have been made to improve a battery module manufacturing process by adjusting the physical properties of the resin (e.g., shear strength, peel strength, tensile strength, thermal conductivity, etc). However, among the above physical properties, if at least one of peel strength and shear strength is not included in a specific range, reworkability is lower or the manufactured laminate is unstable.

### [Prior Art Documents]

### [Patent Documents]

Korean Patent Laid-Open Publication No. 10-2020-0002349
Korean Patent Laid-Open Publication No. 10-2021-0020665

### [SUMMARY OF THE INVENTION]

An object of embodiments of the present invention is to provide a battery cell stack, to which a resin layer including a solvent-free adhesive suitable for improving structural stability, reliability and reworkability is applied, while simplifying materials and processes necessary to manufacture the cell stack, and a method of manufacturing the same.

To achieve the above object, according to an aspect of the present invention, there is provided a battery cell stack including: a plurality of battery cells; and a resin layer which is wholly or partially in contact with an outer surface of at least one of the plurality of battery cells. The scope of the invention is defined by the appended claims.

The resin layer is formed of a resin layer composition including a solvent-free adhesive.

The resin layer has peel strength of 1,000 gf/in to 3,000 gf/in (3.86N/cm to 11.58 N/cm) measured according to ASTM D3330.

The resin layer has a shear strength of 20 kgf/sq-in to 100 kgf/sq-in (30.40 N/cm² to 152.00 N/cm²) measured according to ASTM D1002.

In some embodiments, the solvent-free adhesive may include one or more selected from the group consisting of an ethylene vinyl acetate resin, polyamide resin, fatty acid polyamide resin, polyester resin, polyurethane resin, polyolefin resin, styrene resin and rubber resin.

The solvent-free adhesive is a pressure sensitive adhesive (PSA).

In some embodiments, the resin layer may have a viscosity of 2,000 cps to 18,500 cps at 160 °C.

In some embodiments, the resin layer may have a softening point of 60 °C to 140 °C.

In some embodiments, the resin layer may have a withstand voltage of 10.0 to 30.0 kV/mm measured according to ASTM D149.

In some embodiments, the battery cell stack may further include a functional layer disposed between the plurality of battery cells, and the resin layer may be wholly or partially in contact with the functional layer.

In some embodiments, the functional layer may include one or more selected from the group consisting of aerogel, talc, kaolin, alumina, feldspar, pyrophyllite, sericite, mica, elvan, bentonite, sepiolite, diatomite, perlite, fumed silica, silica, glass bubble, glass bead, magnesium hydroxide, calcium carbide, glass fibers, glass wool, rock wool, ceramic wool, nylon, aramid fibers, carbon fibers, polypropylene fibers, polyethylene fibers, polyester fibers, polyurethane fibers, acrylic fibers, polyvinyl chloride acetate fibers, and rayon fibers.

According to another aspect of the present invention, there is provided a method of manufacturing a battery cell stack, which includes: applying a resin layer including a solvent-free adhesive to an outer surface of a battery cell so as to bring it wholly or partially into contact therewith; and stacking an additional battery cell on the resin layer.

The resin layer has have a peel strength of 1,000 gf/in to 3,000 gf/in (3.86N/cm to 11.58 N/cm) measured according to ASTM D3330.

The resin layer has a shear strength of 20 kgf/sq-in to 100 kgf/sq-in (30.40 N/cm² to 152.00 N/cm²) measured according to ASTM D1002.

In some embodiments, the resin layer may be applied by spray coating or slot die coating.

In some embodiments, the application of the resin layer may be performed at 140 to 180 °C.

In some embodiments, the resin layer may have a thickness of 0.01 to 0.10 mm.

According to embodiments of the present invention, by applying a resin layer including a solvent-free adhesive, it is possible to manufacture a battery cell stack with improved structural stability and reliability, while simplifying the required materials and processes.

Further, according to embodiments of the present invention, when a defect occurs during manufacturing the battery cell stack, it is possible to easily perform a rework and minimize a damage to the cells.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a schematic view of a battery cell stack according to an exemplary embodiment;
FIG. 2 is a schematic view of a battery cell stack according to another exemplary embodiment; and
FIG. 3 is a schematic view of a battery cell stack according to yet another exemplary embodiment.

### [DETAILED DESCRIPTION OF THE INVENTION]

In descriptions of the embodiments of the present invention, publicly known techniques that are judged to be able to make the purport of the present invention unnecessarily obscure will not be described in detail. Referring to the drawings, wherein like reference characters designate like or corresponding parts throughout the several views. In addition, the terms as used herein are defined by taking functions of the present invention into account and can be changed according to the custom or intention of users or operators. Therefore, definition of the terms should be made according to the overall disclosure set forth herein.

As used herein, the term "resin layer" refers to a layer including a resin component. The resin layer may be an adhesion layer or an adhesive layer.

As used herein, the term "solvent-free adhesive" refers to a thermoplastic adhesive which is made of a thermoplastic resin without using a solvent or other solvents, and is capable of being melted at a melting point or more, and then solidified by cooling. The solvent-free adhesive is a hot-melt adhesive which is applied to a material to be adhered in a liquid state at a high temperature, and exhibits an adhesive force by dissipating heat to the surface of the material to be adhered and surroundings after compression, thus to be cooled and solidified within a few seconds.

As used herein, the term "pressure sensitive adhesive (PSA)" refers to an adhesive on which an adhesive material acts when applying pressure on the adhesive so as to adhere it to an adhesive surface.

Hereinafter, specific embodiments of the present invention will be described with reference to the accompanying drawings. However, these are merely illustrative examples and the present invention is not limited thereto.

A battery cell stack according to an embodiment of the present invention may be widely used in various devices requiring electricity storage, such as an energy storage system (ESS) as well as a vehicle.

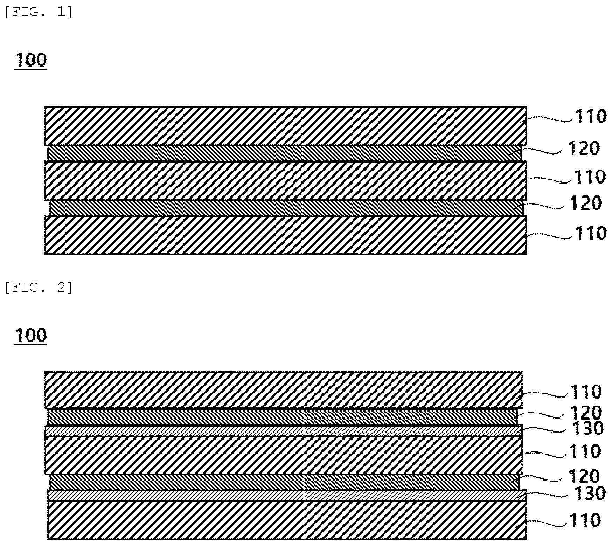

FIGS. 1 to 3 are schematic views of a battery cell stack according to exemplary embodiments, respectively.

Referring to FIG. 1, a battery cell stack 100 according to an embodiment of the present invention may include a plurality of battery cells 110 and a resin layer 120 wholly or partially in contact with an outer surface of at least one of the plurality of battery cells. The battery cell stack 100 is configured by stacking the plurality of battery cells 110. The battery cells 110 may be vertically erected and stacked in a left-and-right direction (i.e., in a horizontal direction), but may be horizontally laid down and stacked in an up- and-down direction (i.e., in a vertical direction) as necessary.

The battery cell 110 according to an embodiment of the present invention is a general battery cell. The battery cell 110 according to an embodiment of the present invention may be configured in a form in which an electrode assembly and an electrolyte are accommodated in a pouch. The electrode assembly includes a plurality of electrode plates and electrode tabs, and is accommodated in the pouch. Herein, the electrode plate includes a cathode plate and an anode plate, and the electrode assembly may be configured in a stacked form so that the cathode plate and the anode plate have wide surfaces facing each other with a separator interposed therebetween.

The battery cells 110 may be fixed to each other by the resin layer 120. For example, the resin layer 120 may be formed on the outer surfaces of the battery cells 110 to be mutually fixed to the battery cells 110 adjacent thereto. That is, the battery cells 110 may be fixed to each other due to the resin layer 120 formed between the battery cell 110 and the battery cell 110. The resin layer 120 may be formed as an adhesive layer. In addition, the resin layer 120 may be wholly or partially applied to the surface of the battery cell 110. As the battery cells 110 and the resin layers 120 are repeatedly disposed, the battery cells 110 may be wholly or partially fixed to each other through the resin layer 120.

As an exemplary embodiment, the resin layer 120 includes a solvent-free adhesive material, preferably a pressure sensitive adhesive (PSA) material, and more preferably a solvent-free or hot-melt coatable pressure sensitive adhesive.

In some embodiments, the solvent-free adhesive may include one or more selected from the group consisting of an ethylene vinyl acetate resin, polyamide resin, fatty acid polyamide resin, polyester resin, polyurethane resin, polyolefin resin, styrene resin and rubber resin.

In some embodiments, the resin layer may include a flame retardant. Since the resin layer including the solvent-free adhesive may be applied by spray coating or slot die coating, in order to exhibit effective flame retardancy while simultaneously exhibiting suitable properties, the flame retardant preferably includes at least one of a phosphorus-based flame retardant and a nitrogen-based flame retardant.

As an exemplary embodiment, the phosphorus-based flame retardant may include a phosphate compound, a phosphonate compound, a phosphinate compound, a phosphine oxide compound, a phosphazene compound, or metal salts thereof and the like. These compounds may be used alone or in combination of two or more thereof.

As a specific embodiment, the phosphorus-based flame retardant may include diphenyl phosphate, diaryl phosphate, triphenyl phosphate, tricresyl phosphate, trizyrenyl phosphate, tri(2,6-dimethylphenyl) phosphate, tri(2,4,6-trimethylphenyl)phosphate, tri(2,4-di-tert-butylphenyl)phosphate, tri(2,6-dimethylphenyl) phosphate, bisphenol-A bis(diphenylphosphate), resorcinol bis(diphenylphosphate), resorcinol bis[bis(2,6-dimethylphenyl)phosphate], resorcinol bis[bis(2,4-di-tert-butylphenyl)phosphate], hydroquinone bis[bis(2,6-dimethylphenyl)phosphate], hydroquinone bis[bis(2,4-di-tert-butylphenyl)phosphate], an oligomeric phosphoric acid ester compound, and the like, but it is not limited thereto. These compounds may be applied alone or in a form of a mixture of two or more thereof.

As an exemplary embodiment, the nitrogen-based flame retardant may include melamine and melamine derivatives. These may be used alone or in combination of two or more thereof.

As a specific embodiment, the nitrogen-based flame retardant may include melamine, melamine phosphate, melamine cyanurate, etc., but it is not limited thereto. These may be applied alone or in a form of a mixture of two or more thereof.

As an exemplary embodiment, the flame retardant may be included in an amount of 10 to 50 parts by weight ("wt. parts") based on 100 wt. parts of the resin layer. The contents of the above-described phosphorus-based flame retardant and the nitrogen-based flame retardant are preferably added and used alone or in the same proportion as each other in a sum of both retardants. If the proportion of the flame retardant is less than 10 wt. parts, the flame retardancy is insufficient, whereas if it exceeds 50 wt. parts, physical properties such as an adhesive force or workability when applying the resin layer may be deteriorated.

In some embodiments, the resin layer 120 preferably has a peel strength of about 1,000 gf/in to 3,000 gf/in (3.86N/cm to 11.58 N/cm) measured according to ASTM D3330. When the peel strength is 1,000 gf/in (3.86N/cm) or more, excellent adhesive force to various materials forming the battery cell stack 100 may be exhibited, and the relative flow of the battery cells 110 may be prevented, thus to improve the stability of the battery module, whereas if it is less than 1,000 gf/in (3.86N/cm), there may be problems in that adhesion to the cell stack is deteriorated in the process of stacking the cells or an alignment between the cells is misaligned due to micro-vibrations in the process or micro-vibrations and accelerations in the shuttle process. When the peel strength is 3,000 gf/in (11.58 N/cm) or less, the application workability of the resin layer 120 may be maintained at an appropriate temperature, whereas if it exceeds 3,000 gf/in (11.58 N/cm), reworkability may be reduced, and it becomes difficult to disassemble the battery cell stack when recycling, as well as, when a composition of the resin layer 120 ("resin layer 120 composition") is used in a solvent-free adhesive method, since the application should be performed at a high temperature, a damage due to heat may be induced on the surface of the battery cell.

In some embodiments, the resin layer 120 may have a shear strength of about 20 kgf/sq-in to 100 kgf/sq-in (30.40 N/cm² to 152.00 N/cm²) measured according to ASTM D1002. When the shear strength is 20 kgf/sq-in (30.40 N/cm²) or more, impact resistance of the battery cell stack 100 may be improved, whereas if it is less than 20 kgf/sq-in (30.40 N/cm²), there may be problems in that adhesion to the cell stack is deteriorated in the process of stacking the cells or the alignment between the cells is misaligned due to micro-vibrations in the process or micro-vibrations and accelerations in the shuttle process. When the shear strength is 100 kgf/sq-in (152.00 N/cm²) or less, the application workability of the resin layer 120 may be maintained at an appropriate temperature, whereas if it exceeds 100 kgf/sq-in (152.00 N/cm²) (152.00 N/cm²), reworkability may be reduced, and it becomes difficult to disassemble the battery cell stack when recycling, as well as, when the resin layer 120 composition is used in a solvent-free adhesive method, since the application should be performed at a high temperature, a damage due to heat may be induced on the surface of the battery cell.

In some embodiments, the resin layer 120 may have a viscosity of about 2,000 to 18,500 cps at 160 °C. In the above viscosity range, when applying the resin layer 120 to the battery cell 110 before curing, workability necessary for the process may be improved, and the stability and reliability of the battery cell stack 100 may be secured after curing.

In some embodiments, the resin layer 120 may have a softening point of about 60 to 140 °C, and preferably about 80 to 105 °C. In the above softening point range, when a defect occurs during manufacturing the battery cell stack 100, a rework is easily performed and a damage to the cell may be minimized, as well as the resin layer 120 may be easily removed when recycling the battery cell stack 100. Whereas, if the softening point is less than 60°C, the viscosity of the resin layer 120 composition is low, and re-liquefaction may occur in the resin layer 120 due to heat generated from the battery cell 110, and thereby causing the impact resistance of the battery cell stack 100 to be deteriorated. If the softening point exceeds 140°C, when applying the resin layer, nozzle clogging of an applicator or scattering of the resin layer 120 composition may occur, and a damage due to heat may occur in the battery cell 110 when the resin layer 120 is re-liquefied.

In some embodiments, the resin layer 120 may have a withstand voltage of 10.0 kV/mm to 30 kV/mm or less measured according to ASTM D149. When the withstand voltage is 10.0 kV/mm or more, performances of the battery cell stack 100 may be maintained and stability may be secured. As the value of the withstand voltage is increased, the resin layer 120 exhibits excellent insulation, and it is not particularly limited, but considering the adhesive force of the resin layer 120 including the solvent-free adhesive, it is preferable that the withstand voltage is 30 kV/mm or less.

The resin layer 120 may be formed in a form of a relatively thin layer compared to the battery cell 110. In this case, the resin layer 120 may have a thickness within a range of 0.01 to 0.10 mm, or 0.02 to 0.08 mm, or about 0.03 to 0.05 mm, for example. If the resin layer 120 is less than 0.01 mm, a fixing force between the battery cells 110 is weakened to cause a reduction in the stability of the battery cell stack 100, whereas if it exceeds 0.10 mm, the thickness of the battery cell stack 100 may be increased, which may be disadvantageous in terms of battery module design. The thickness may be a thickness of the thinnest portion, a thickness of the thickest portion, or an average thickness of the resin layer 120.

The resin layer 120 may also be formed in a form of filling an inner space of a battery case including the battery cell stack 100. In this case, the battery cell 110 may exist in a state of being inserted into the resin layer 120.

In some embodiments, the battery cell stack 100 may further include a functional layer 130 disposed between the plurality of battery cells 110, wherein the resin layer 120 may be wholly or partially in contact with the functional layer 130. The functional layer 130 may be an insulation layer for improving electrical insulation, or may be an insulation layer for improving thermal insulation. The functional layer 130 may include a binder resin and/or particles.

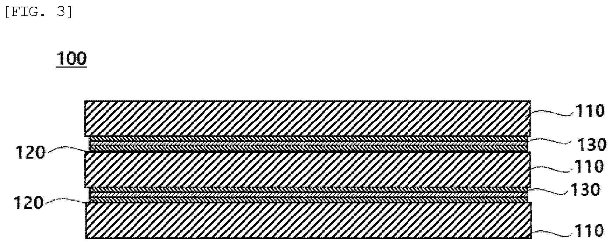

Referring to FIGS. 2 and 3, the functional layer 130 may be formed by applying it to the surface of the battery cell 110, or may be formed separately in the resin layer 120. The functional layer 130 may be intended to block heat generated from the battery cell 110, or may be intended to prevent ignition of the battery.

In some embodiments, the functional layer 130 may include one or more selected from the group consisting of aerogel, talc, kaolin, alumina, feldspar, pyrophyllite, sericite, mica, elvan, bentonite, sepiolite, diatomite, perlite, fumed silica, silica, glass bubble, glass bead, magnesium hydroxide, calcium carbide, glass fibers, glass wool, rock wool, ceramic wool, nylon, aramid fibers, carbon fibers, polypropylene fibers, polyethylene fibers, polyester fibers, polyurethane fibers, acrylic fibers, polyvinyl chloride acetate fibers, and rayon fibers.

A method of manufacturing a battery cell stack according to exemplary embodiments of the present invention may include: applying a resin layer including a solvent-free adhesive to an outer surface of a battery cell so as to bring it wholly or partially into contact therewith; and stacking an additional battery cell on the resin layer.

The battery cell, the resin layer, and the solvent-free adhesive are the same as those described above, and therefore will not be described in detail.

The resin layer may be heated inside a tank of the applicator and pumped to a nozzle to be applied to the outer surface of the battery cell. In particular, since the resin layer according to the present invention includes the solvent-free adhesive, it may be applied by a spray coating or slot die coating. The application of the resin layer may be performed at 140 °C to 180 °C.

After application of the resin layer, an additional battery cell is stacked on the resin layer. The stacking of the additional battery cells may be continuously performed after the application of the resin layer. The method of manufacturing a battery cell stack significantly reduces the process steps and time compared to the conventional process using the tape method, and thus productivity of the battery cell stack may be greatly increased.

### Examples and comparative examples

### Preparation of resin layer

An aluminum pouch (material to be adhered) used for manufacturing the battery cell was cut into a width of about 10 mm, then a heated resin layer composition was applied to a PET surface of the pouch washed with acetone to a thickness of 0.03 mm using an applicator, thus to form a resin layer.

As components of the resin layer composition, rubber resin as a basic resin, paraffin wax as a wax component, terpene resin as a tackifier resin, polybdenum as a plasticizer, calcium carbonate as a filler, and phenyl-β-naphthylamine as an antioxidant were used, and physical properties of the resin layers were controlled by varying addition amounts of these components (Examples 1 to 5 and Comparative Examples 1 to 4).

In addition, a resin layer was formed using a water-soluble adhesive (3M, Fastbond^{™}) (Comparative Example 5).

### Preparation of battery cell stack

The resin layers of Examples 1 to 5 and Comparative Examples 1 to 5 were applied to a battery cell whose surface was washed with acetone to a thickness of 0.03 mm, respectively. After stacking another battery cell on the applied resin layer, the resin layer was cured to prepare a battery cell stack.

### Experimental example

(1) Peel strength: Peel strengths of the resin layers were measured according to ASTM D3330. A test was conducted using an eXpert 7600 single column testing machine. After the battery pouch is fixed to fixing equipment, the peel strength was measured while peeling off the cured resin layer from the aluminum pouch (material to be adhered) used for manufacturing the battery cell at a speed of about 300 mm/min and a peeling angle of 180 degrees. Herein, the peel strength may be measured within a range of 0.01 to 0.10 mm in the thickness of the resin layer.
(2) Shear strength: Shear strengths of the resin layers were measured according to ASTM D1002.
(3) Withstand voltage: Withstand voltages of the resin layers were measured according to ASTM D149.
(4) Application state: After drying the resin layers, surfaces thereof were visually checked.
   ∘: Non-uniformity was not visually confirmed on the applied surface.
   Δ: Non-uniformity was observed locally on the applied surface.
   ×: Non-uniformity was visually confirmed on the applied surface.
(5) Reworkability: After storage for 1 hour at a temperature of 100 °C and a humidity of 50% RH, the resin layers were peeled off at a speed of 0.3 m/min, and an evaluation of the residue was performed according to the following standards.
   ∘: Resin layer residue does not exist at all on the material to be adhered.
   Δ: A resin layer residue exists on a portion of the material to be adhered.
   ×: Resin layer residues exist on the entire surface of the material to be adhered.
(6) Impact resistance: To measure the impact resistance, the battery cell stack was mounted on a test fixture, then an impact of 500 m/s² acceleration in a direction of one axis of X, Y and Z axes was repeatedly applied thereto 10 times, and then an impact of 500 m/s² acceleration in a direction opposite to the same axis was repeatedly applied thereto 10 times. The above process was repeated in directions of the remaining axes. Thereafter, the state of the battery cell stack was visually inspected to evaluate the impact resistance according to the following standards.
   ∘: Crack was not visually confirmed in the resin layer.
   Δ: Cracks were observed locally in the resin layer.
   ×: Cracks were confirmed as a whole in the resin layer.
(7) Insulation resistance: To measure the insulation resistance, the battery cell stack was mounted on a test fixture, then an impact of 500 m/s² acceleration in a direction of one axis of X, Y and Z axes was repeatedly applied thereto 10 times, and then an impact of 500 m/s² acceleration in a direction opposite to the same axis was repeatedly applied thereto 10 times. The above process was repeated in directions of the remaining axes. After one day, the insulation resistance was measured using a HIOKI insulation resistor, and if the value was 100 MΩ or more, it was marked with ∘, and if it was lower than this value, it was marked with X.

Experimental results are shown in Tables 1 and 2 below.

**[TABLE 1]**

| Section | Peel strength (gf/in) | Shear strength (kgf/sq-in) | Viscosity (cps, at 160°C) | Softening point (°C) | Melting point (°C) | Withstand voltage (kV/mm) |
|---|---|---|---|---|---|---|
| Example 1 | 1,000 | 20 | 11,100 | 61.2 | 142.8 | 18.8 |
| Example 2 | 1,500 | 20 | 14,900 | 104.9 | 163.2 | 14.9 |
| Example 3 | 1,400 | 22 | 13,800 | 80.1 | 151.2 | 11.9 |
| Example 4 | 2,400 | 28 | 14,400 | 128.6 | 181.8 | 13.5 |
| Example 5 | 3,000 | 26 | 18,500 | 139.7 | 213.7 | 10.1 |
| Example 6 | 1,700 | 20 | 2,000 | 61.1 | 139.1 | 15.3 |
| Example 7 | 1,200 | 38 | 5,700 | 75.6 | 149.6 | 14.2 |
| Comparative Example 1 | 900 | 20 | 12,500 | 61.7 | 147.5 | 7.7 |
| Comparative Example 2 | 5,500 | 17 | 14,900 | 143.5 | 187.5 | 8.2 |
| Comparative Example 3 | 1,500 | 19 | 18,800 | 147.5 | 192.2 | 7.8 |
| Comparative Example 4 | 3,100 | 41 | 8,900 | 155.2 | 219.5 | 6.5 |
| Comparative Example 5 | 700 | 12 | 1,600 | 56.8 | 118.4 | 6.6 |

**[TABLE 2]**

| Section | Application state | Reworkability | Impact resistance | Dielectric breakdown |
|---|---|---|---|---|
| Example 1 | ○ | ○ | ○ | ○ |
| Example 2 | ○ | ○ | ○ | ○ |
| Example 3 | ○ | ○ | ○ | ○ |
| Example 4 | ○ | ○ | ○ | ○ |
| Example 5 | ○ | ○ | ○ | ○ |
| Example 6 | ○ | ○ | ○ | ○ |
| Example 7 | ○ | ○ | ○ | ○ |
| Comparative Example 1 | × | △ | × | × |
| Comparative Example 2 | × | × | △ | × |
| Comparative Example 3 | × | × | × | × |
| Comparative Example 4 | × | × | △ | × |
| Comparative Example 5 | ○ | △ | × | × |

Referring to Tables 1 and 2, it can be seen from the above results that the application state of the resin layers of Examples 1 to 7 is good, and the reworkability is excellent when a defect in the process occurs, and it can be seen that the battery cell stack including the resin layers of Examples 1 to 7 is also excellent in impact resistance and dielectric breakdown characteristics.

Meanwhile, in the case of Comparative Examples 1 to 5 in which the peel strength or shear strength of the resin layers does not satisfy the range of the present invention, it was found that the application state of the resin layer was non-uniform, and the impact resistance of the battery cell stack, to which the resin layer is applied, was deteriorated. In the case of Comparative Examples 2 to 4 in which the softening point of the resin layers does not satisfy the range of the present invention, it was found that the resin layer residue existed on the entire surface of the adhered.

In addition, in the case of Comparative Example 5, which contains a water-soluble adhesive, it was found that the application state was good, but reworkability was lowered, and insulation properties of the resin layer was easily destroyed when applying a certain impact.

### [Description of Reference Numerals]

100: Battery cell stack
110: Battery cell
120: Resin layer
130: Functional layer

## Claims

1. A battery cell stack (100) comprising:
a plurality of battery cells (110); and
a resin layer (120) which is wholly or partially in contact with an outer surface of at least one of the plurality of battery cells (110),
wherein the resin layer (120) includes a solvent-free adhesive, and has a peel strength of 1,000 gf/in to 3,000 gf/in (3.86N/cm to 11.58 N/cm) measured according to ASTM D3330 and as disclosed in the description, and a shear strength of 20 kgf/sq-in to 100 kgf/sq-in (30.40 N/cm² to 152.00 N/cm²) measured according to ASTM D1002 and as disclosed in the description, and
wherein the solvent-free adhesive is a pressure sensitive adhesive (PSA).

2. The battery cell stack (100) according to claim 1, wherein the solvent-free adhesive includes one or more selected from the group consisting of an ethylene vinyl acetate resin, polyamide resin, fatty acid polyamide resin, polyester resin, polyurethane resin, polyolefin resin, styrene resin and rubber resin.

3. The battery cell stack (100) according to claim 1 or 2, wherein the resin layer (120) has a softening point of 60.0 °C to 140.0 °C.

4. The battery cell stack (100) according to anyone of the preceding claims, wherein the resin layer (120) has a withstand voltage of 10.0 kV/mm to 30.0 kV/mm measured according to ASTM D149 and as disclosed in the description.

5. The battery cell stack (100) according to anyone of the preceding claims, wherein the battery cell stack (100) further comprises a functional layer disposed between the plurality of battery cells (110), and
the resin layer (120) is wholly or partially in contact with the functional layer (130).

6. The battery cell stack (100) according to claim 5, wherein the functional layer (130) includes one or more selected from the group consisting of aerogel, talc, kaolin, alumina, feldspar, pyrophyllite, sericite, mica, elvan, bentonite, sepiolite, diatomite, perlite, fumed silica, silica, glass bubble, glass bead, magnesium hydroxide, calcium carbide, glass fibers, glass wool, rock wool, ceramic wool, nylon, aramid fibers, carbon fibers, polypropylene fibers, polyethylene fibers, polyester fibers, polyurethane fibers, acrylic fibers, polyvinyl chloride acetate fibers, and rayon fibers.

7. A method of manufacturing a battery cell stack (100) as defined in claim 1, the method comprising:
applying a resin layer (120), which includes a solvent-free adhesive and has a peel strength of 1,000 gf/in to 3,000 gf/in (3.86N/cm to 11.58 N/cm) measured according to ASTM D3330 and as disclosed in the description, and a shear strength of 20 kgf/sq-in to 100 kgf/sq-in (30.40 N/cm² to 152.00 N/cm²) measured according to ASTM D1002 and as disclosed in the description, to an outer surface of a battery cell (110) so as to bring it wholly or partially into contact therewith; and
stacking an additional battery cell (110) on the resin layer (120), and
wherein the solvent-free adhesive is a pressure sensitive adhesive (PSA).

8. The method according to claim 7, wherein the resin layer (120) is applied by spray coating or slot die coating.

9. The method according to claim 7 or 8, wherein the application of the resin layer (120) is performed at 140 °C to 180 °C.

10. The method according to anyone of claims 7 to 9, wherein the resin layer (120) has a thickness of 0.01 to 0.10 mm.

## Patentansprüche

1. Batteriezellenstapel (100), umfassend:
eine Vielzahl von Batteriezellen (110); und
eine Harzschicht (120), die gänzlich oder teilweise in Kontakt mit einer äußeren Fläche von mindestens einer der Vielzahl von Batteriezellen (110) ist,
wobei die Harzschicht (120) einen lösungsmittelfreien Klebstoff umfasst und eine Schälfestigkeit von 1.000 gf/in bis 3.000 gf/in (3,86 N/cm bis 11,58 N/cm), gemessen gemäß ASTM D3330 und wie in der Beschreibung offenbart, und eine Scherfestigkeit von 20 kgf/sqin bis 100 kgf/sq-in (30,40 N/cm² bis 152,00 N/cm²), gemessen gemäß ASTM D1002 und wie in der Beschreibung offenbart, aufweist, und
wobei der lösungsmittelfreie Klebstoff ein druckempfindlicher Klebstoff (PSA) ist.

2. Batteriezellenstapel (100) gemäß Anspruch 1, wobei der lösungsmittelfreie Klebstoff eines oder mehrere ausgewählt aus der Gruppe bestehend aus einem Ethylenvinylacetatharz, Polyamidharz, Fettsäurepolyamidharz, Polyesterharz, Polyurethanharz, Polyolefinharz, Styrolharz und Kautschukharz umfasst.

3. Batteriezellenstapel (100) gemäß Anspruch 1 oder 2, wobei die Harzschicht (120) einen Erweichungspunkt von 60,0 °C bis 140,0 °C aufweist.

4. Batteriezellenstapel (100) gemäß irgend einem der vorhergehenden Ansprüche, wobei die Harzschicht (120) eine Spannungsfestigkeit von 10,0 kV/mm bis 30,0 kV/mm, gemessen gemäß ASTM D149 und wie in der Beschreibung offenbart, aufweist.

5. Batteriezellenstapel (100) gemäß irgend einem der vorhergehenden Ansprüche, wobei der Batteriezellenstapel (100) ferner eine Funktionsschicht umfasst, die zwischen der Vielzahl von Batteriezellen (110) angeordnet ist, und
die Harzschicht (120) gänzlich oder teilweise in Kontakt mit der Funktionsschicht (130) ist.

6. Batteriezellenstapel (100) gemäß Anspruch 5, wobei die Funktionsschicht (130) eines oder mehrere ausgewählt aus der Gruppe bestehend aus Aerogel, Talk, Kaolin, Aluminiumoxid, Feldspat, Pyrophyllit, Sericit, Glimmer, Elvan, Bentonit, Sepiolith, Diatomit, Perlit, pyrogener Kieselerde, Kieselerde, Glasblase, Glasperle, Magnesiumhydroxid, Calciumcarbid, Glasfasern, Glaswolle, Steinwolle, Keramikwolle, Nylon, Aramidfasern, Kohlenstofffasern, Polypropylenfasern, Polyethylenfasern, Polyesterfasern, Polyurethanfasern, Acrylfasern, Polyvinylchloridacetatfasern und Rayonfasern umfasst.

7. Verfahren zum Herstellen eines Batteriezellenstapels (100) wie in Anspruch 1 definiert, wobei das Verfahren umfasst:
Aufbringen einer Harzschicht (120), die einen lösungsmittelfreien Klebstoff umfasst und eine Schälfestigkeit von 1.000 gf/in bis 3.000 gf/in (3,86 N/cm bis 11,58 N/cm), gemessen gemäß ASTM D3330 und wie in der Beschreibung offenbart, und eine Scherfestigkeit von 20 kgf/sq-in bis 100 kgf/sq-in (30,40 N/cm² bis 152,00 N/cm²), gemessen gemäß ASTM D1002 und wie in der Beschreibung offenbart, aufweist, auf eine äußere Fläche einer Batteriezelle (110), um sie damit gänzlich oder teilweise in Kontakt zu bringen; und
Stapeln einer zusätzlichen Batteriezelle (110) auf die Harzschicht (120), und
wobei der lösungsmittelfreie Klebstoff ein druckempfindlicher Klebstoff (PSA) ist.

8. Verfahren gemäß Anspruch 7, wobei die Harzschicht (120) durch Sprühbeschichtung oder Schlitzdüsenbeschichtung aufgebracht wird.

9. Verfahren gemäß Anspruch 7 oder 8, wobei das Aufbringen der Harzschicht (120) bei 140 °C bis 180 °C durchgeführt wird.

10. Verfahren gemäß irgend einem der Ansprüche 7 bis 9, wobei die Harzschicht (120) eine Dicke von 0,01 bis 0,10 mm aufweist.

## Revendications

1. Empilement d'éléments de batterie (100) comprenant :
une pluralité d'éléments de batterie (110) ; et
une couche de résine (120) qui est entièrement ou partiellement en contact avec une surface externe d'au moins l'un de la pluralité d'éléments de batterie (110),
où la couche de résine (120) comprend un adhésif sans solvant, et a une résistance au pelage de 1 000 gf/in à 3 000 gf/in (3,86 N/cm à 11,58 N/cm) mesurée selon la norme ASTM D3330 et telle que divulguée dans la description, et une résistance au cisaillement de 20 kgf/sq-in à 100 kgf/sq-in (30,40 N/cm² à 152,00 N/cm²) mesurée selon la norme ASTM D1002 et telle que divulguée dans la description, et
où l'adhésif sans solvant est un adhésif sensible à la pression (PSA).

2. Empilement d'éléments de batterie (100) selon la revendication 1, où l'adhésif sans solvant comprend un ou plusieurs choisis dans le groupe constitué d'une résine d'éthylène-acétate de vinyle, d'une résine de polyamide, d'une résine de polyamide d'acide gras, d'une résine de polyester, d'une résine de polyuréthane, d'une résine de polyoléfine, d'une résine de styrène et d'une résine de caoutchouc.

3. Empilement d'éléments de batterie (100) selon la revendication 1 ou 2, où la couche de résine (120) a un point de ramollissement de 60,0 °C à 140,0 °C.

4. Empilement d'éléments de batterie (100) selon l'une quelconque des revendications précédentes, où la couche de résine (120) a une tension électrique de tenue de 10,0 kV/mm à 30,0 kV/mm mesurée selon la norme ASTM D149 et telle que divulguée dans la description.

5. Empilement d'éléments de batterie (100) selon l'une quelconque des revendications précédentes, où l'empilement d'éléments de batterie (100) comprend en outre une couche fonctionnelle disposée entre la pluralité d'éléments de batterie (110), et
la couche de résine (120) est entièrement ou partiellement en contact avec la couche fonctionnelle (130).

6. Empilement d'éléments de batterie (100) selon la revendication 5, où la couche fonctionnelle (130) comprend un ou plusieurs choisis dans le groupe constitué d'un aérogel, d'un talc, d'un kaolin, d'une alumine, d'un feldspath, d'une pyrophyllite, d'une séricite, d'un mica, d'un elvan, d'une bentonite, d'une sépiolite, d'une diatomite, d'une perlite, d'une silice pyrogénée, d'une silice, d'une bulle de verre, d'une bille de verre, d'un hydroxyde de magnésium, d'un carbure de calcium, de fibres de verre, d'une laine de verre, d'une laine de roche, d'une laine céramique, d'un nylon, de fibres d'aramide, de fibres de carbone, de fibres de polypropylène, de fibres de polyéthylène, de fibres de polyester, de fibres de polyuréthane, de fibres acryliques, de fibres d'acétate de polychlorure de vinyle et de fibres de rayonne.

7. Procédé de fabrication d'un empilement d'éléments de batterie (100) selon la revendication 1, le procédé comprenant :
appliquer une couche de résine (120), qui comprend un adhésif sans solvant et a une résistance au pelage de 1 000 gf/in à 3 000 gf/in (3,86 N/cm à 11,58 N/cm) mesurée selon la norme ASTM D3330 et telle que divulguée dans la description, et une résistance au cisaillement de 20 kgf/sq-in à 100 kgf/sq-in (30,40 N/cm² à 152,00 N/cm²) mesurée selon la norme ASTM D1002 et telle que divulguée dans la description, sur une surface externe d'un élément de batterie (110) de manière à l'amener entièrement ou partiellement en contact avec celle-ci ; et
empiler un élément de batterie supplémentaire (110) sur la couche de résine (120), et
où l'adhésif sans solvant est un adhésif sensible à la pression (PSA).

8. Procédé selon la revendication 7, où la couche de résine (120) est appliquée par revêtement par pulvérisation ou revêtement par die à fente.

9. Procédé selon la revendication 7 ou 8, où l'application de la couche de résine (120) est effectuée à 140°C à 180°C.

10. Procédé selon l'une quelconque des revendications 7 à 9, où la couche de résine (120) a une épaisseur de 0,01 à 0,10 mm.
